# EUROPÄISCHE PATENTSCHRIFT

(11) **EP 0 481 210 B1**
(45) Veröffentlichungstag und Bekanntmachung des Hinweises auf die Patenterteilung: **07.12.1994**
(21) Anmeldenummer: 91115241.1
(22) Anmeldetag: 10.09.1991
(51) Int. Cl.: F23D 14/62, F23D 14/02, C03B 5/235

(54) **Gasbrenner, insbesondere für Glasschmelzöfen**
Gas burner, especially for glass melting furnaces
Brûleur à gaz, spécialement pour des fours de fusion du verre

(30) Priorität: 13.10.1990 DE 4032582
(43) Veröffentlichungstag der Anmeldung: 22.04.1992
(73) Patentinhaber: Beteiligungen Sorg GmbH & Co. KG, D-97816 Lohr (DE)
(72) Erfinder: Wagner, Manfred, W-8770 Lohr/Main (DE); Pieper, Helmut, W-8770 Lohr/Main (DE)
(74) Vertreter: Schulze Horn, Stefan, Dipl.-Ing. M.Sc.

(56) Entgegenhaltungen:
- WO-A-86/06150
- DE-A- 1 551 815
- DE-A- 3 306 892
- DE-B- 1 280 460
- FR-A- 2 152 109

## Beschreibung

Die Erfindung betrifft einen Gasbrenner, insbesondere für Glasschmelzöfen, mit einem Mischrohr mit einem Lochmischkörper zur Mischung von Brenngas mit durch die Gasströmung angesaugter Luft.

Für den Einsatz in Schmelzöfen, insbesondere in Glasschmelzöfen, sind bereits eine große Anzahl von Brennern verschiedenster Bauart bekannt. Nachteilig weisen diese aber eine große Anzahl von Bauteilen mit entsprechenden Kosten auf, sie besitzen eine starke Geräuschentwicklung und sind recht schwierig optimal einzustellen.

Es ist weiterhin ein einfacher Brenner bekannt (DE-AS 1 280 460), der aber nur zum Abfackeln von Gas dient und eine Regelung, wie sie in einem Schmelzofen erforderlich ist, nicht zuläßt.

Es ist demgegenüber Aufgabe der Erfindung, einen Gasbrenner zu schaffen, der die vorgenannten Nachteile nicht mehr aufweist und insbesondere eine wesentliche Minimierung der Bauteile und entsprechend geringe Baukosten sowie geringe Störungsvoraussetzungen bietet, bei welchem der Geräuschpegel stark reduziert ist, der eine bessere Vorkarborierung und somit geringere Ansaugluftmenge aufweist, bei dem die Flammführung bei optimalem Ausbrand stabil ist und der einfach bedient werden kann, wobei eine visuelle Kontrolle der Brennereinstellung durch die in jedem Glasschmelzofen vorhandenen Sichtfenster möglich ist.

Diese Aufgabe wird bei dem eingangs genannten Gasbrenner dadurch gelöst, daß der Lochmischkörper innerhalb des Mischrohres auf dem Ende eines in Richtung seiner Längsachse beweglichen Luftansaugrohres angeordnet ist und zwischen dem Lochmischkörper und der Innenfläche des Mischrohres eine Dichthülse vorhanden ist, die eine Bewegung des Lochmischkörpers in Richtung der Längsachse gestattet.

Vorteilhaft kann zur Erzielung einer stabilen Flamme das Mischrohr an seinem gausaustrittseitigem Ende zu einer Austrittsdüse verengt sein und zur optimalen Durchmischung von Gas und Luft können die Öffnungen des Mantels des Lochmischkörpers für den Gaseintritt gegenüber der Austrittsöffnung für das Gas-Luftgemisch sehr klein, d. h. < 1 % sein.

Um eine einfache manuelle Einstellung des Gasbrenners zu erreichen, kann vorteilhaft das Luftansaugrohr im äußeren Bereich ein Außengewinde und an seinem äußeren Ende ein Handrad zur Einstellung der Längsposition aufweisen. Das Außengewinde wirkt dabei mit einem Innengewinde in der Durchtrittsöffnung des Brennerkörpers zusammen.

Bei mehreren parallel gefahrenen Brennern können durch Verstellung der Lochkörper die Flammlängen der Brenner untereinander variiert werden.

Zur Verbesserung der Luftansaugung kann weiterhin das Luftansaugrohr innerhalb des Lochmischkörpers bis nahe zu dessen strömungsmäßigem Ende reichen.

Besonders vorteilhaft ist es bei dem erfindungsgemäßen Brenner, daß die Einstellung direkt über das Luftzuführungsrohr erfolgt, so daß im Brennerinneren keine ungekühlten Teile vorliegen und die Einstellung direkt wirkt.

Im folgenden wird ein Ausführungsbeispiel der Erfindung anhand eines Längsschnittes eines erfindungsgemäßen Brenners näher beschrieben.

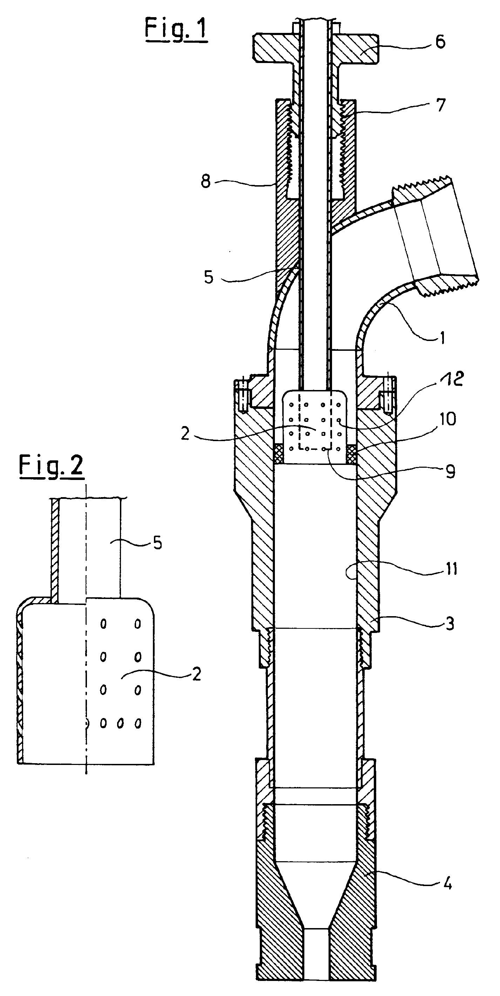

- Figur 1: zeigt den Längsschnitt und
- Figur 2: eine weitere Ausgestaltung des Lochmischkörpers.

Der Gasbrenner besteht aus einem Brennerkörper, der im wesentlichen aus einem Mischrohr 3 und einem Gaszuführungsstutzen 1 besteht, der strömungsmäßig in den Anfang des Mischrohres 3 mündet. Strömungsmäßig am Ende des Mischrohres ist eine Austrittsdüse 4 angeordnet.

In den Gaszuführungsstutzen 1 führt konzentrisch zu dem Mischrohr 3 ein Luftansaugrohr 5, dessen Ende in einen Lochmischkörper 2 mündet, der wie ein zylindrischer Becher ausgebildet ist. Der Mantel des Lochmischkörpers 2 weist eine größere Anzahl von Öffnungen 12 auf, deren Größe gering ist. Sie beträgt weniger als 1 % der Austrittsöffnung des Lochmischkörpers 2.

Zwischen dem Lochmischksörper 2 und der Innenfläche 11 des Mischrohres 3 ist eine Dichthülse 10 angeordnet, die den Gasdurchtritt einerseits verhindert, andererseits aber eine Längsverschiebung des Lochmischkörpers 2 zur Einstellung des Brenners erlaubt.

Zwischen dem äußeren Ende des Luftansaugrohres 5 und des Brennerkörpers 8 ist ein Gewinde 7 angeordnet, so daß bei Rotation des Luftansaugrohres 5 über ein ebenfalls am äußeren Ende angeordnetes Handrad 6 eine Längseinstellung sowohl des Luftansaugrohres 5 als auch des Lochmischkörpers 2 möglich ist. Dabei werden eine größere oder kleinere Anzahl von Öffnungen 12 für den Gasdurchtritt frei, so daß damit das Gas-Luft-Verhältnis exakt und einfach eingestellt werden kann.

Der Lochmischkörper 2 zerlegt den aus dem Gaszuführungsstutzen 1 in das Mischrohr 3 eintretenden Gasstrahl in definiert viele Teilstrahlen, die sich im Innenteil des Lochmischkörpers entsprechend der Längsachse ausrichten. Dabei entsteht auch der für die Ansaugluft notwendige Unterdruck, wobei der Luftstrom widerstandsarm zufließt, so daß eine ausreichende Luftversorgung auch bei geringen Gasströmungen gewährleistet ist.

Im Lochmischkörper 2 und dem Mischrohr 3 vermischen sich die Gasteilstrahlen optimal mit der Ansaugluft, wobei das üblicherweise an einer Ventilnadel bzw. in der Gasdüse entstehende Strömungsgeräusch entfällt.

Weiterhin wird ein vom Ventilkörper verursachter Gas- und Luftdrall vermieden, so daß die Flamme zu leuchten vermag.

In einer zweiten Ausführung kann der Lochmischkörper durch ein Rohrstück ersetzt werden, welches den gleichen Durchmesser wie der Lochmischkörper aufweist und dessen Innenbohrung dem Innendurchmesser der Luftzuführung entspricht.

In diesem Rohrstück werden Bohrungen in einem bestimmten Winkel angebracht, so daß das austretende Gas in dem Luftrohr eine Injektorwirkung erzeugt.

Durch Verschiebung des Rohrstückes wird die Aufteilung des Gasstromes variiert, die Menge der angesaugten Luft verändert und somit die Flammlänge beeinflußt.

## Patentansprüche

1. Gasbrenner, insbesondere für Glasschmelzöfen, mit einem Mischrohr mit einem Lochmischkörper zur Mischung von Brenngas mit durch die Gasströmung angesaugter Luft,
dadurch gekennzeichnet, daß der Lochmischkörper (2) innerhalb des Mischrohres (3) auf dem Ende eines in Richtung seiner Längsachse beweglichen Luftansaugrohres (5) angeordnet ist und zwischen dem Lochmischkörper (2) und der Innenfläche (11) des Mischrohres (3) eine Dichthülse (10) vorhanden ist, die eine Bewegung des Lochmischkörpers (2) in Richtung der Längsachse gestattet.

2. Gasbrenner nach Anspruch 1, dadurch gekennzeichnet, daß das Mischrohr (3) an seinem gasaustrittseitigem Ende zu einer Austrittsdüse verengt ist.

3. Gasbrenner nach Anspruch 1 oder 2, dadurch gekennzeichnet, daß die Öffnungen (12) in dem Mantel des Lochmischkörpers (2) zum Gaseintritt gegenüber der Austrittsöffnung für das Gas-Luftgemisch sehr klein (< 1 %) sind.

4. Gasbrenner nach einem der Ansprüche 1 bis 3, dadurch gekennzeichnet, daß das Luftansaugrohr (5) innerhalb des Lochmischkörpers (2) bis nahe zu dessen strömungsmäßigen Ende reicht.

5. Gasbrenner nach einem der Ansprüche 1 bis 4, dadurch gekennzeichnet, daß das Luftansaugrohr (5) im äußeren Bereich ein Außengewinde (7) und an seinem äußeren Ende ein Handrad (6) zur Einstellung der Längsposition aufweist.

6. Gasbrenner nach einem der Ansprüche 1 bis 3 und 5, dadurch gekennzeichnet, daß die Öffnungen (12) in dem Lochmischkörper (2) Schrägbohrungen sind, die zur Öffnung des Lochmischkörpers (2) hin nach innen verlaufen.

7. Gasbrenner nach Anspruch 6, dadurch gekennzeichnet, daß das Luftansaugrohr (5) innerhalb des Lochmischkörpers (2) an dessen strömungsmäßigen Anfang endet.

## Claims

1. A gas burner, especially for glass melting furnaces comprising a mixing tube with an apertured mixing body for mixing burner gas with air sucked in by the gas stream,
**characterized in**
that the apertured mixing body (2) is arranged at the end of an air intake tube (5) movable in the direction of the longitudinal axis thereof, and a sealing sleeve (10) is provided between the apertured mixing body (2) and the inner surface (11) of the mixing tube (3) with the sealing sleeve (10) enabling a movement of the apertured mixing body (2) in the direction of the longitudinal axis.

2. Gas burner as claimed in claim 1, characterized in that the mixing tube (3) is narrowed at the end of the gas outlet thereof to form an outlet nozzle.

3. Gas burner as claimed in claim 1 or 2, characterized in that the apertures (12) in the jacket of the apertured mixing body (2) for the gas inlet are very small (< 1 %) in relation to the outlet aperture of the gas-air mixture.

4. Gas burner as claimed in the claims 1 to 3, characterized in that the air intake tube (5) within the apertured mixing body (2) extends nearly to the stream related end thereof.

5. Gas burner as claimed in the claims 1 to 4, characterized in that the air intake tube (5) comprises an outer thread (7) in the outer area and a handwheel (6) for adjusting the longitudinal position.

6. Gas burner as claimed in the claims 1 to 3 and 5, characterized in, that the apertures (12) in the apertured mixing body (2) are inclined borings which extend inwards to the aperture of the apertured mixing body (2).

7. Gas burner as claimed in claim 6, characterized in that the air intake tube (5) within the apertured mixing body (2) ends at the stream related beginning thereof.

## Revendications

1. Brûleur à gaz, destiné en particulier à des fours de fusion de verre, pourvu d'un tube mélangeur à corps mélangeur perforé pour mélanger un gaz combustible avec l'air aspiré par le courant de gaz,
caractérisé en ce que le corps mélangeur perforé (2) est disposé à l'intérieur du tube mélangeur (3) à l'extrémité d'un tube d'aspiration d'air (5) mobile dans la direction de son axe longitudinal et une douille d'étanchéité (10), qui permet un déplacement du corps mélangeur perforé (2) dans la direction de l'axe longitudinal, est disposée entre le corps mélangeur perforé (2) et la surface intérieure (11) du tube mélangeur (3).

2. Brûleur à gaz selon la revendication 1, caractérisé en ce que le tube mélangeur (3) est rétréci, à son extrémité située du côté de sortie des gaz, de manière à former une buse de sortie.

3. Brûleur à gaz selon la revendication 1 ou 2, caractérisé en ce que les ouvertures (12) ménagées dans l'enveloppe du corps mélangeur perforé (2) sur le côté d'entrée des gaz sont très petites par rapport à l'ouverture de sortie du mélange de gaz et d'air (< 1%).

4. Brûleur à gaz selon l'une des revendications 1 à 3, caractérisé en ce que le tube d'aspiration d'air (5) pénètre à l'intérieur du corps mélangeur perforé (2) jusqu'au voisinage de l'extrémité de celui-ci selon le sens d'écoulement.

5. Brûleur à gaz selon l'une des revendications 1 à 4, caractérisé en ce que le tube d'aspiration d'air (5) présente, dans la zone extérieure, un filet extérieur (7) et, à son extrémité extérieure, un volant à main (6) pour régler la position longitudinale.

6. Brûleur à gaz selon l'une des revendications 1 à 3 et 5, caractérisé en ce que les ouvertures (12) ménagées dans le corps mélangeur perforé (2) sont des alésages obliques, dont le tracé est dirigé vers l'intérieur vers l'ouverture du corps mélangeur perforé (2).

7. Brûleur à gaz selon la revendication 6, caractérisé en ce que le tube d'aspiration d'air (5) se termine à l'intérieur du corps mélangeur perforé (2) au début de celui-ci selon le sens d'écoulement.
